# EUROPEAN PATENT APPLICATION

(11) **EP 4 350 506 A1**
(43) Date of publication of application: **10.04.2024**
(21) Application number: 21944015.3
(22) Date of filing: 31.05.2021
(51) Int. Cl.: G06F 8/70

(54) **INFORMATION PROCESSING PROGRAM, INFORMATION PROCESSING METHOD AND INFORMATION PROCESSING DEVICE**

(71) Applicant: FUJITSU LIMITED, Kawasaki-shi, Kanagawa 211-8588 (JP)
(72) Inventor: NISHIGAKI, Masaki, Kawasaki-shi, Kanagawa 211-8588 (JP)
(74) Representative: Hoffmann Eitle
(86) International application number: PCT/JP2021/020648
(87) International publication number: WO 2022/254504

(57) **Abstract**

A storage unit (11) stores incompatibility information (13) that indicates a feature of a first language element included in a first source code that uses first software and a rewriting method of the first language element for making the first source code compatible with second software, and incompatibility information (14) that indicates a feature of a second language element included in a second source code that uses the second software and an event that occurs due to the second source code. A processing unit (12) rewrites a syntax tree (15) that indicates a structure of a plurality of language elements that includes the first language element based on the rewriting method indicated by the incompatibility information (13), searches the rewritten syntax tree (15) for the second language element based on the incompatibility information (14), and outputs warning information (16) that indicates relevance between the rewriting method and the event in a case where the second language element is included in the rewritten syntax tree (15).

## Description

### FIELD

The present invention relates to an information processing program, an information processing method, and an information processing device.

### BACKGROUND

An information processing system may use software provided by a software vendor. As an example of the software, middleware such as a database management system (DBMS) is exemplified. A source code of a program executed in the information processing system may be created depending on specifications of the provided software. For example, the program may transmit a request to the provided software to call a function of the software, such as transmitting a structured query language (SQL) statement to the DBMS to call a database operation function.

The information processing system may change the software to be used. For example, in a case where the software vendor performs version upgrade, the information processing system may update the software to be used to a new version. Furthermore, for example, the information processing system may switch to the same type of software provided by another software vendor.

Note that, by changing the software to be used, a failure based on incompatibility between software may occur in the existing program. For example, an error may occur in transmission of a request from the existing program to the new software because language specifications for describing the request are different, such as language specifications of supported SQL statements. Furthermore, for example, the current software and the new software may have different functions or types of performance for the same request. Thus, there is a possibility that changing the software to be used involves correcting the source code.

Note that there has been proposed an information association device that calculates statistical features by using a data set for the respective classification labels of different classification systems and determines classification labels having a correspondence relationship between the different classification systems based on similarity between the statistical features. Furthermore, there has been proposed an information processing device that eliminates incompatibility between different web browsers by converting a data format.

### CITATION LIST

### PATENT DOCUMENT

Patent Document 1: Japanese Laid-open Patent Publication No. 2005-63332
Patent Document 2: Japanese Laid-open Patent Publication No. 2016-218704

### SUMMARY

### [TECHNICAL PROBLEM]

As one method of supporting correction of the source code, a method is conceivable in which a computer stores incompatibility information defining a syntactic feature that has a possibility of causing a failure based on incompatibility, and detects an incompatible portion from the source code based on the incompatibility information. Furthermore, a method is conceivable in which a computer defines, in incompatibility information, a rewriting method of an incompatible portion for eliminating a failure, and presents or executes the rewriting method.

However, the rewriting method defined in certain incompatibility information is not necessarily created after sufficient consideration of possibility of causing another failure. For example, there is a possibility that a rewriting method of certain incompatibility information eliminates a request transmission error from an existing program to new software but significantly deteriorates response performance of the new software. On the other hand, an occurrence condition itself of another failure may have already been considered in another piece of incompatibility information. Therefore, in one aspect, an object of the present invention is to determine relevance among a plurality of pieces of incompatibility information.

### [SOLUTION TO PROBLEM]

In one aspect, an information processing program for causing a computer to execute the following processing is provided. First incompatibility information that indicates a feature of a first language element included in a first source code that uses first software and a rewriting method of the first language element for making the first source code compatible with second software is acquired. A syntax tree that indicates a structure of a plurality of language elements that includes the first language element is rewritten based on the rewriting method indicated by the first incompatibility information. Based on second incompatibility information that indicates a feature of a second language element included in a second source code that uses the second software and an event that occurs due to the second source code, the rewritten syntax tree is searched for the second language element. In a case where the second language element is included in the rewritten syntax tree, warning information that indicates relevance between the rewriting method and the event is output.

Furthermore, in one aspect, an information processing method executed by a computer is provided. Furthermore, in one aspect, an information processing device that includes a storage unit and a processing unit is provided.

According to an aspect of the embodiments, an information processing program that causes at least one computer to execute a process, the process includes acquiring first incompatibility information that indicates a feature of a first language element included in a first source code that uses first software and a rewriting method of the first language element for making the first source code compatible with second software; rewriting a syntax tree that indicates a structure of a plurality of language elements that includes the first language element based on the rewriting method indicated by the first incompatibility information; searching the rewritten syntax tree for the second language element based on second incompatibility information that indicates a feature of a second language element included in a second source code that uses the second software and an event that occurs due to the second source code; and outputting warning information that indicates relevance between the rewriting method and the event in a case where the second language element is included in the rewritten syntax tree.

### [ADVANTAGEOUS EFFECTS OF INVENTION]

In one aspect, relevance among a plurality of pieces of incompatibility information may be determined.

The object described above and other objects, features, and advantages of the present invention will become clear from the following description related to the appended drawings, which represent preferred embodiments as examples of the present invention.

### BRIEF DESCRIPTION OF DRAWINGS

FIG. 1 is a diagram for describing an information processing device of a first embodiment;
FIG. 2 is a diagram illustrating a hardware example of an information processing device of a second embodiment;
FIG. 3 is a diagram illustrating an example of a flow of incompatibility absorption of a database product;
FIG. 4 is a diagram illustrating a functional example of the information processing device of the second embodiment;
FIG. 5 is a diagram illustrating an example of a source code and a syntax tree before conversion;
FIG. 6 is a diagram illustrating an example of attribute information;
FIG. 7 is a diagram illustrating an example of a syntax table;
FIG. 8 is a diagram illustrating an example of an instruction table;
FIG. 9 is a diagram illustrating an example of syntax incompatibility information;
FIG. 10 is a diagram illustrating an example of a source code and a syntax tree after conversion;
FIG. 11 is a diagram illustrating an example of performance incompatibility information;
FIG. 12 is a diagram illustrating an example of structured query language (SQL) syntax information;
FIG. 13 is a diagram illustrating an estimation example of a syntax tree from the syntax incompatibility information;
FIG. 14 is a flowchart illustrating an example of a procedure of incompatibility detection;
FIG. 15 is a flowchart illustrating an example of a procedure of incompatibility information inspection; and
FIG. 16 is a flowchart (continued) illustrating the example of the procedure of the incompatibility information inspection.

### DESCRIPTION OF EMBODIMENTS

Hereinafter, the present embodiments will be described with reference to the drawings.

### [First Embodiment]

A first embodiment will be described.

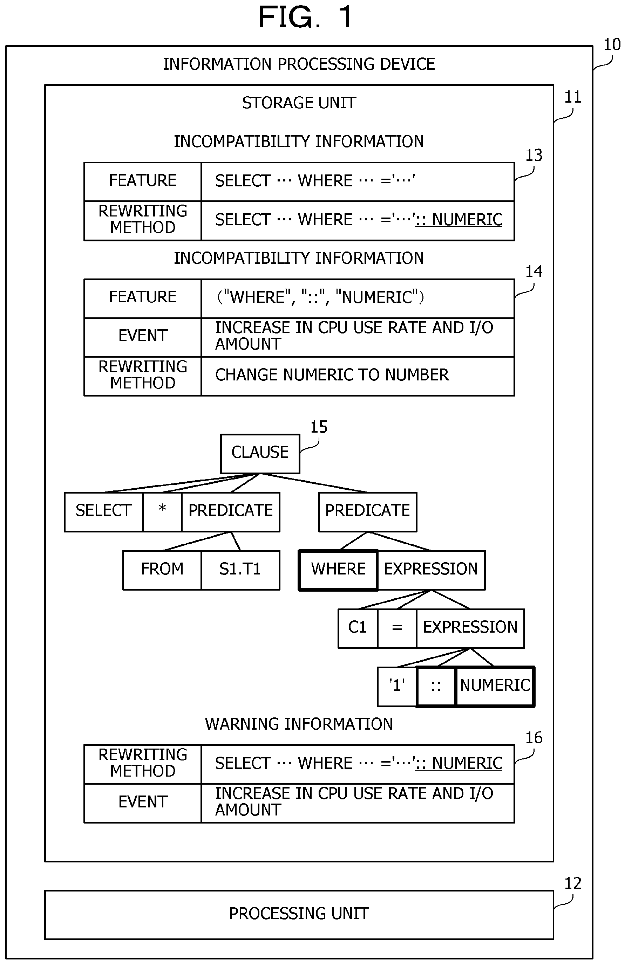

FIG. 1 is a diagram for describing an information processing device of the first embodiment.

An information processing device 10 of the first embodiment supports incompatibility absorption of correcting a source code using certain software to be compatible with another software. The information processing device 10 accumulates, as knowledge information indicating know-how of the incompatibility absorption, incompatibility information for detecting an incompatible portion from the source code and rewriting the incompatible portion. The information processing device 10 may be a client device or a server device. The information processing device 10 may be referred to as a computer, an incompatibility information management device, an incompatibility detection device, or a development support device.

The information processing device 10 includes a storage unit 11 and a processing unit 12. The storage unit 11 may be a volatile semiconductor memory such as a random access memory (RAM) or may be a nonvolatile storage such as a hard disk drive (HDD) or a flash memory. The processing unit 12 is, for example, a processor such as a central processing unit (CPU), a graphics processing unit (GPU), or a digital signal processor (DSP). Note that the processing unit 12 may include an electronic circuit for a specific application, such as an application specific integrated circuit (ASIC) or a field programmable gate array (FPGA). The processor executes, for example, a program stored in a memory such as a RAM (which may be the storage unit 11). A set of processors may be referred to as a multiprocessor or simply "processors".

The storage unit 11 stores incompatibility information 13 and 14.

The incompatibility information 13 and 14 is knowledge information expressing, in a certain format, knowledge for detecting and rewriting a description (incompatible portion) incompatible with second software from a source code of a program using first software. The first software corresponds to software before the change, and the second software corresponds to software after the change. The software before and after the change may be a software product provided by a software vendor, or may be middleware such as a database management system (DBMS) or a Web server. Furthermore, the software before and after the change may be the same type of software provided by different software vendors, or may be different versions of software provided by the same software vendor.

The source code may define a request message indicating a request to software. The request message may be a structured query language (SQL) statement, and the source code may be described in an SQL or an SQL procedural language. The languages for describing the request to the software before and after the change may be similar but not the same. For example, both the software before and after the change may support a general-purpose query language such as the SQL, while the software before and after the change may independently extend the query language.

The incompatibility information 13 is, for example, syntax incompatibility information for dealing with syntax incompatibility. The syntax incompatibility is incompatibility in which syntax allowed in the software before the change is not allowed in the software after the change. Thus, when an existing program having the syntax incompatibility transmits a request message to the software after the change, a transmission error may occur and execution of the software after the change may fail.

The incompatibility information 14 is, for example, function incompatibility information for dealing with function incompatibility or performance incompatibility information for dealing with performance incompatibility. The function incompatibility is incompatibility in which an execution result of the software after the change does not match an execution result of the software before the change. Thus, when an existing program having the function incompatibility transmits a request message to the software after the change, a transmission error does not occur, but an expected execution result may not be obtained.

The performance incompatibility is incompatibility in which effective performance of the software after the change is significantly lower than that of the software before the change. Thus, when an existing program having the performance incompatibility transmits a request message to the software after the change, the same execution result as that of the software before the change is obtained, but a standby time may become significantly long. The function incompatibility and the performance incompatibility may be eliminated by correcting the source code.

The incompatibility information 13 indicates features of one or more language elements that may be included in the source code corresponding to the software before the change. The language element satisfying this feature corresponds to an incompatible portion. The language element is a syntactic unit element such as a statement, a clause, a phrase, or a word. The language element may be referred to as a syntax element. The features of the language elements may include a keyword and an attribute, and may include a positional relationship between two or more language elements. The features of the language elements may be expressed in a format on the premise of search in a syntax tree generated by syntactic analysis of the source code. For example, the features of the language elements may be expressed by a sequence of instructions indicating a search procedure of the syntax tree.

Furthermore, the incompatibility information 13 indicates a rewriting method of an incompatible portion for making the source code compatible with the software after the change. The rewriting method of the incompatible portion may include deletion of an existing language element or addition of a new language element. The rewriting method of the incompatible portion may be expressed in a format on the premise of execution in the syntax tree. For example, the rewriting method of the incompatible portion may be expressed by a sequence of instructions indicating a procedure of rewriting the syntax tree.

The incompatibility information 14 indicates features of one or more language elements that may be included in the source code corresponding to the software after the change. The language element satisfying this feature corresponds to an incompatible portion. The features of the language elements may be expressed by a keyword list indicating appearance order of a plurality of keywords. Furthermore, the features of the language elements may be expressed in a format on the premise of search in the syntax tree, such as a sequence of instructions indicating a search procedure in the syntax tree.

Furthermore, the incompatibility information 14 indicates an event that occurs due to the incompatible portion described above. The event is, for example, a failure that occurs in the software after the change. The event may be performance incompatibility such as a reduction in a response speed, a reduction in a throughput, an increase in a CPU use rate, and an increase in an I/O amount. The incompatibility information 14 may indicate a rewriting method of the incompatible portion for suppressing the event.

For example, the incompatibility information 13 indicates that an SQL statement of SELECT...WHERE...='...' has syntax incompatibility, and that the syntax incompatibility is eliminated by a rewriting method of adding a data type cast of : :NUMERIC. Furthermore, for example, the incompatibility information 14 indicates that the source code sequentially including three keywords of WHERE, ::, and NUMERIC has performance incompatibility, and that the performance incompatibility is eliminated by a rewriting method of changing NUMERIC to NUMBER.

The processing unit 12 considers, by determining relevance between the incompatibility information 13 and 14, a risk that a rewriting method defined in the incompatibility information 13 causes another failure in the source code. Associating different pieces of incompatibility information may be referred to as combining the pieces of incompatibility information. The relevance between the incompatibility information 13 and 14 may be determined at the time of inspection of the incompatibility information 13, or may be determined at the time of performing incompatibility absorption of the source code by using the incompatibility information 13.

First, the processing unit 12 generates a syntax tree 15. For example, at the time of incompatibility absorption of a certain source code, the processing unit 12 performs syntactic analysis on the source code to generate the syntax tree 15. Furthermore, for example, at the time of inspection of the incompatibility information 13, the processing unit 12 estimates a feature of a syntax tree generated from the source code to which the incompatibility information 13 is applied, based on a feature of a language element indicated by the incompatibility information 13, and generates the syntax tree 15. The processing unit 12 rewrites the syntax tree 15 based on the rewriting method defined in the incompatibility information 13.

Next, the processing unit 12 searches the rewritten syntax tree 15 for a language element having a feature indicated by the incompatibility information 14. For example, the syntax tree 15 indicating an SQL statement of SELECT...WHERE...='...' is rewritten to indicate an SQL statement of SELECT...WHERE...='...'::NUMERIC according to the rewriting method defined in the incompatibility information 13. From the rewritten syntax tree 15, three keywords of WHERE, ::, and NUMERIC are detected in this order according to the keyword list defined in the incompatibility information 14.

In a case where the rewritten syntax tree 15 includes the feature defined in the incompatibility information 14, the processing unit 12 generates and outputs warning information 16. The warning information 16 indicates that the incompatibility information 13 and the incompatibility information 14 are related to each other. The warning information 16 indicates relevance between the rewriting method indicated by the incompatibility information 13 and the event indicated by the incompatibility information 14. For example, the warning information 16 warns about a risk that the rewriting method of the incompatibility information 13 causes the event of the incompatibility information 14.

The processing unit 12 may store the warning information 16 in a nonvolatile storage, may display the warning information 16 on a display device, or may transmit the warning information 16 to another information processing device. At this time, the processing unit 12 may rewrite the source code to be subjected to the incompatibility absorption according to the rewriting method of the incompatibility information 13. Furthermore, in a case where the incompatibility information 14 defines the rewriting method, the processing unit 12 may rewrite the source code to be subjected to the incompatibility absorption according to the rewriting method of the incompatibility information 14. Furthermore, the processing unit 12 may present options of the rewriting method to allow a user to select the rewriting method. Furthermore, the processing unit 12 may request the user to reconsider the incompatibility information 13.

As described above, the information processing device 10 of the first embodiment determines relevance between the incompatibility information 13 and 14 to evaluate a risk that the rewriting method defined in the incompatibility information 13 causes another failure in the source code. Thus, the occurrence of another failure associated with the incompatibility absorption, such as a significant reduction in response performance, is suppressed in advance, and quality of the corrected source code is improved. Furthermore, quality of the incompatibility information 13 is improved by requesting reconsideration of the incompatibility information 13.

With this configuration, the incompatibility absorption is made more efficient. Furthermore, the information processing device 10 determines the relevance between the incompatibility information 13 and 14 by rewriting and searching the syntax tree 15. Thus, determination accuracy of the relevance is improved, and the determination of the relevance is made more efficient.

### [Second Embodiment]

Next, a second embodiment will be described. An information processing device 100 of the second embodiment analyzes a source code that uses a database product, and supports correction work of the source code when the database product to be used is changed. The change of the database product includes change between database products provided by different software vendors and change between different versions provided by the same software vendor. There may be incompatibility between different database products. Correcting the source code so as to eliminate a failure due to the incompatibility may be referred to as incompatibility absorption. The information processing device 100 supports this incompatibility absorption. The information processing device 100 may be a client device or a server device. Note that the information processing device 100 corresponds to the information processing device 10 of the first embodiment.

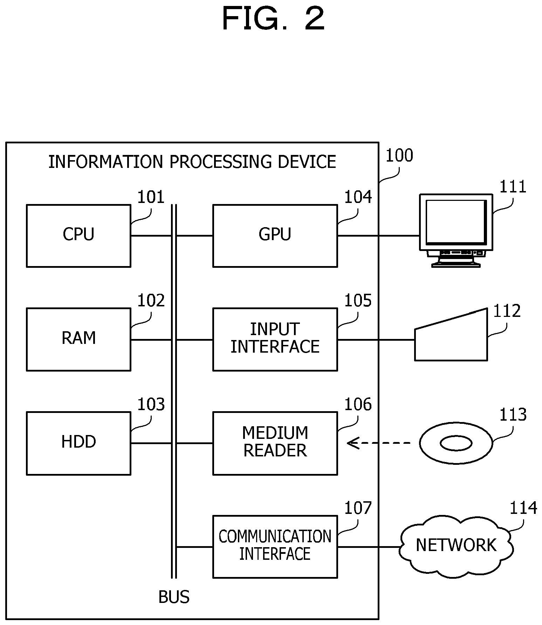

FIG. 2 is a diagram illustrating a hardware example of the information processing device of the second embodiment.

The information processing device 100 includes a CPU 101, a RAM 102, an HDD 103, a GPU 104, an input interface 105, a medium reader 106, and a communication interface 107 that are coupled to a bus. The CPU 101 corresponds to the processing unit 12 of the first embodiment. The RAM 102 or the HDD 103 corresponds to the storage unit 11 of the first embodiment.

The CPU 101 is a processor that executes program instructions. The CPU 101 loads at least a part of a program and data stored in the HDD 103 into the RAM 102, and executes the program. The information processing device 100 may include a plurality of processors. A set of processors may be referred to as a multiprocessor or simply "processors".

The RAM 102 is a volatile semiconductor memory that temporarily stores a program to be executed by the CPU 101 and data to be used by the CPU 101 for arithmetic operations. The information processing device 100 may include a type of a volatile memory other than the RAM.

The HDD 103 is a nonvolatile storage that stores software programs such as an operating system (OS), middleware, and application software, and data. The information processing device 100 may include another type of nonvolatile storage such as a flash memory or a solid state drive (SSD).

The GPU 104 generates an image in cooperation with the CPU 101, and outputs the image to a display device 111 coupled to the information processing device 100. The display device 111 is, for example, a cathode ray tube (CRT) display, a liquid crystal display, an organic electroluminescence (EL) display, or a projector. Note that another type of output device such as a printer may be coupled to the information processing device 100.

The input interface 105 receives an input signal from an input device 112 coupled to the information processing device 100. The input device 112 is, for example, a mouse, a touch panel, or a keyboard. A plurality of input devices may be coupled to the information processing device 100.

The medium reader 106 is a reading device that reads a program and data recorded in a recording medium 113. The recording medium 113 is, for example, a magnetic disk, an optical disk, or a semiconductor memory. The magnetic disk includes a flexible disk (FD) and an HDD. The optical disk includes a compact disc (CD) and a digital versatile disc (DVD). The medium reader 106 copies a program and data read from the recording medium 113 to another recording medium such as the RAM 102 or the HDD 103. The read program may be executed by the CPU 101.

The recording medium 113 may be a portable recording medium. The recording medium 113 may be used for distribution of a program and data. Furthermore, the recording medium 113 and the HDD 103 may be referred to as computer-readable recording media.

The communication interface 107 is coupled to a network 114, and communicates with other information processing devices via the network 114. The other information processing devices may include a terminal device of a creator who creates incompatibility information, a terminal device of an approver who approves registration of the incompatibility information, and a terminal device of a user who performs incompatibility absorption work. The communication interface 107 may be a wired communication interface coupled to a wired communication device such as a switch or a router, or may be a wireless communication interface coupled to a wireless communication device such as a base station or an access point.

Next, a flow of incompatibility absorption by an information processing system will be described.

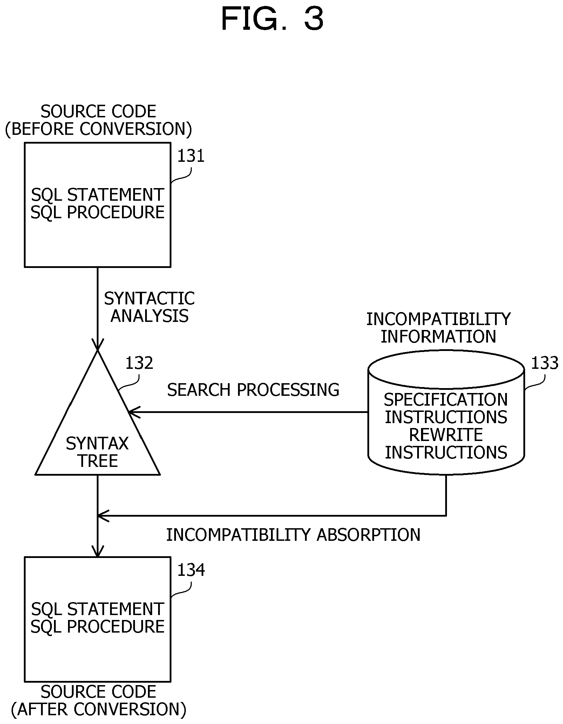

FIG. 3 is a diagram illustrating an example of a flow of incompatibility absorption of a database product.

The information processing device 100 acquires a source code 131 depending on the database product before change. The source code 131 includes an SQL statement or an SQL procedure code. The SQL statement is a database query described using the SQL. Although basic specifications of the SQL are standardized, some database products may have their own specifications obtained by extending the basic specifications. The SQL procedure code is a program of a procedural language defined to be consistent with the SQL, and operates as a stored procedure.

The information processing device 100 performs syntactic analysis on the source code 131 and generates a syntax tree 132. The syntax tree 132 is tree type data indicating a structure of language elements such as a statement, a clause, a phrase, and a word. The syntax tree 132 generated through the syntactic analysis may express a context in which each word appears in the source code 131, unlike a case where only lexical analysis is performed. For example, in the SQL statement or the SQL procedure code, even when variables are the same, effective ranges of the variables may be different depending on positions where the variables are described. Therefore, the syntax tree 132 is useful for the incompatibility absorption. Note that the information processing device 100 does not need to perform semantic analysis on the source code 131, and the syntax tree 132 does not need to include semantic information indicating logical meanings of the language elements.

The information processing device 100 holds, as knowledge information, incompatibility information 133 associated with a set of the database product before the change and the database product after the change. The database product may be identified with a set of a product name and a version number. The incompatibility information 133 includes a sequence of specification instructions and a sequence of rewrite instructions. The specification instructions are instructions for specifying, from the syntax tree 132, an incompatible portion that normally operates in the database product before the change but may cause a failure in the database product after the change. The rewrite instructions are instructions for rewriting the syntax tree 132 so that a failure does not occur in the database product after the change, for the incompatible portion specified by the specification instructions.

The information processing device 100 executes the specification instructions included in the incompatibility information 133 for the syntax tree 132. In a case where the incompatible portion is detected from the syntax tree 132 by the specification instructions, the information processing device 100 performs the incompatibility absorption on the syntax tree 132 by executing the rewrite instructions included in the incompatibility information 133. With this configuration, the syntax tree 132 is rewritten so as to eliminate the incompatibility. The information processing device 100 generates a source code 134 from the rewritten syntax tree 132. The source code 134 is a result of performing the incompatibility absorption on the source code 131, and is the source code for the database product after the change.

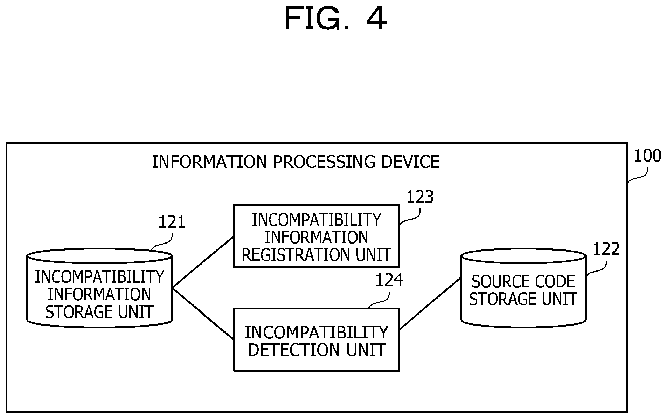

FIG. 4 is a diagram illustrating a functional example of the information processing device of the second embodiment.

The information processing device 100 includes an incompatibility information storage unit 121, a source code storage unit 122, an incompatibility information registration unit 123, and an incompatibility detection unit 124. The incompatibility information storage unit 121 and the source code storage unit 122 are implemented by using, for example, the RAM 102 or the HDD 103. The incompatibility information registration unit 123 and the incompatibility detection unit 124 are implemented by using, for example, the CPU 101 and a program.

The incompatibility information storage unit 121 is a knowledge database that accumulates incompatibility information. The incompatibility information is knowledge information indicating technical know-how related to incompatibility absorption between database products. The incompatibility information storage unit 121 stores syntax incompatibility information and performance incompatibility information.

The syntax incompatibility information indicates an occurrence condition and an elimination method of syntax incompatibility. The syntax incompatibility information is associated with a set of the database product before the change and the database product after the change. The incompatibility information storage unit 121 may store management information for searching for available syntax incompatibility information from the set of the database product before the change and the database product after the change. The syntax incompatibility is a syntax error that syntax of the SQL or SQL procedural language allowed in the database product before the change is not allowed in the database product after the change. The syntax incompatibility information includes specification instructions indicating a procedure of specifying an incompatible portion from a syntax tree and rewrite instructions indicating a procedure of rewriting the specified incompatible portion.

The performance incompatibility information indicates an occurrence condition and an elimination method of performance incompatibility. The performance incompatibility information is associated with a set of the database product before the change and the database product after the change. The incompatibility information storage unit 121 may store management information for searching for available performance incompatibility information from the set of the database product before the change and the database product after the change. The performance incompatibility is that performance of the database product after the change is significantly lower than that of the database product before the change for the same function. The second embodiment deals with performance incompatibility that occurs due to syntax of the SQL or SQL procedural language. The performance incompatibility information includes a feature of the syntax of the SQL or SQL procedural language and a rewriting method thereof.

The source code storage unit 122 stores a source code before conversion. The source code includes an SQL statement or an SQL procedure code. The source code before the conversion may be input to the information processing device 100 by a user, or may be received from another information processing device.

The incompatibility information registration unit 123 receives new incompatibility information. The new incompatibility information may be input to the information processing device 100 by a user, or may be received from another information processing device. The incompatibility information registration unit 123 stores the new incompatibility information in the incompatibility information storage unit 121. At this time, in a case where the new incompatibility information is syntax incompatibility information, the incompatibility information registration unit 123 inspects the syntax incompatibility information to be registered.

As will be described later, the incompatibility information registration unit 123 collates the new syntax incompatibility information with existing performance incompatibility information, and evaluates a risk that rewrite instructions included in the syntax incompatibility information causes known performance incompatibility for the database product after the change. In a case where the new syntax incompatibility information conflicts with the existing performance incompatibility information, the incompatibility information registration unit 123 warns a user who intends to register the new syntax incompatibility information of the risk. In that case, the incompatibility information registration unit 123 may suspend registration of the new syntax incompatibility information and request the user to reconsider.

The incompatibility detection unit 124 reads a source code from the source code storage unit 122. Furthermore, the incompatibility detection unit 124 receives specification of a set of the database product before the change and the database product after the change. This specification may be input to the information processing device 100 by a user, or may be received from another information processing device. The incompatibility detection unit 124 searches the incompatibility information storage unit 121 for syntax incompatibility information corresponding to the specified set of the database products.

The incompatibility detection unit 124 executes specification instructions included in applicable syntax incompatibility information on the source code, and detects an incompatible portion from the source code. The incompatibility detection unit 124 outputs the detected incompatible portion and rewrite instructions included in the syntax incompatibility information, and requests confirmation as to whether or not conversion is possible. The incompatibility detection unit 124 may display the incompatible portion and the rewrite instructions on the display device 111, or may transmit the incompatible portion and the rewrite instructions to another information processing device.

When receiving a conversion instruction as a response to the confirmation request, the incompatibility detection unit 124 executes the rewrite instructions on the source code to convert the source code. The conversion instruction may be input to the information processing device 100 by a user, or may be received from another information processing device. The incompatibility detection unit 124 outputs the source code after the conversion. The incompatibility detection unit 124 may store the source code after the conversion in the source code storage unit 122, may display the source code after the conversion on the display device 111, or may transmit the source code after the conversion to another information processing device.

When outputting the incompatible portion and the rewrite instructions, similarly to the incompatibility information registration unit 123, the incompatibility detection unit 124 collates the syntax incompatibility information in which the incompatible portion is detected with accumulated performance incompatibility information, and evaluates a risk that the rewrite instructions cause known performance incompatibility. Since there is a possibility that new performance incompatibility information is registered after registration of the syntax incompatibility information, relevance between the syntax incompatibility information and the performance incompatibility information that has not been found by the incompatibility information registration unit 123 may be found by the incompatibility detection unit 124.

In a case where the syntax incompatibility information to be applied conflicts with any piece of the performance incompatibility information, the incompatibility detection unit 124 outputs the conflicting performance incompatibility information together with the incompatible portion and the rewrite instructions. In this case, a user who performs incompatibility absorption may consider whether or not to convert the source code in consideration of the risk of the performance incompatibility. In a case where a degree of performance deterioration is small and a benefit of improving efficiency of the incompatibility absorption by using the syntax incompatibility information is great, the user may adopt a presented rewriting method. On the other hand, in a case where the degree of performance deterioration is great and not allowable, the user may consider another rewriting method without adopting the presented rewriting method.

Furthermore, the user who performs the incompatibility absorption may determine to adopt an elimination method defined in the performance incompatibility information in addition to the rewriting method defined in the syntax incompatibility information. Note that a user who registers the incompatibility information and a user who uses the incompatibility information may be the same or different. Each of the user who registers the incompatibility information and the user who uses the incompatibility information may access the information processing device 100 by using an information processing device different from the information processing device 100. Furthermore, the incompatibility information registration unit 123 and the incompatibility detection unit 124 may exist in separate information processing devices.

Next, the syntax tree and the syntax incompatibility information will be described.

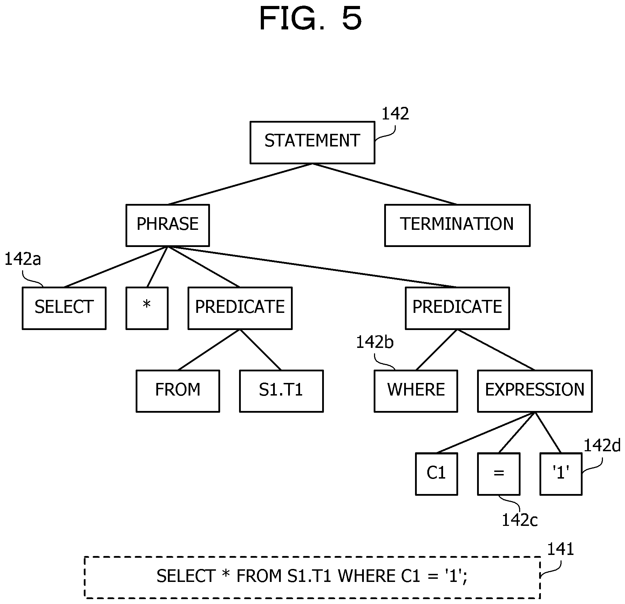

FIG. 5 is a diagram illustrating an example of the source code and the syntax tree before the conversion.

Here, syntax of an SQL statement will be described. A statement includes a terminal symbol at an end. The statement may include a clause before the terminal symbol. The clause includes an instruction word at a head, and includes a phrase, an expression, or a word between the instruction word and the terminal symbol. The phrase includes an object type, a preposition, an adverb, or a parenthesis at a head. The phrase subsequently includes a phrase, an expression, or a word, and the phrase, the expression, or the word may be included more than once in a row. The phrase may subsequently include a clause. The expression includes a function name or a word, and subsequently includes an operator.

The terminal symbol represents a termination of the statement. The terminal symbol may be a semicolon (";"). The word is a smallest language unit that has a meaning in the statement. The word includes an identifier, a reserved word, a function name, and an operator. The reserved word includes an instruction word, an object type, and other reserved words. The instruction word indicates an instruction such as CREATE or UPDATE. The object type indicates a type of an object such as TABLE. The other reserved words are reserved words other than the instruction word and the object type, such as BEGIN. The expression includes a set of a word and a word combined by an operator and a set of a word and an expression combined by an operator. Furthermore, the expression includes a set of a function name and an argument. The argument is sandwiched between an open parenthesis ("(") and a close parenthesis (")").

The phrase includes a general phrase, a predicate phrase, a suffix phrase, and a definition phrase. The general phrase is a set of a modifier and an object. For example, a set of an object type and an identifier is the general phrase, such as TABLE T1. The predicate phrase includes a set of a preposition and an object, such as FROM T1 and AS T2. Furthermore, the predicate phrase includes a set of an adverb and an object, such as WHERE C1. The suffix phrase is sandwiched between an open parenthesis and a close parenthesis, and may be used to specify a data type or a key column. The definition phrase is a language element that specifies a type of a variable, and includes a word other than a reserved word and a reserved word indicating a data type.

Note that, in the illustrated example of the syntax tree, the terminal symbol may be described as "termination", the general phrase as "phrase", the predicate phrase as "predicate", the suffix phrase as "suffix", a definition phrase as "definition", and an unclassified phrase as "unclassified".

A syntax tree 142 indicates syntax of a source code 141. The source code 141 includes an SQL statement of SELECT * FROM S1.T1 WHERE C1='1';. The syntax tree 142 is an undirected graph of a tree structure. The syntax tree 142 includes a plurality of nodes, each indicating a language element, and a plurality of edges combining the plurality of nodes into the tree structure. An edge between a higher node and a lower node represents that a language element corresponding to the lower node is included in a language element corresponding to the higher node. Within the same level, appearance order of the plurality of language elements is held. A language element corresponding to a left node appears before a language element corresponding to a right node.

The syntax tree 142 includes nodes 142a, 142b, 142c, and 142d. The node 142a represents a head instruction word included in a clause, and has a keyword of SELECT. The node 142b represents a head word in a second predicate phrase included in the clause, and has a keyword of WHERE. The node 142c represents an operator in an expression included in the predicate phrase described above, and has a keyword of =. The node 142d represents a quotation identifier following the operator of the node 142c, and has a keyword of '1'. Note that each node has attributes such as a type and a value of a language element. In the illustrated example of the syntax tree, only a part of the attributes is displayed.

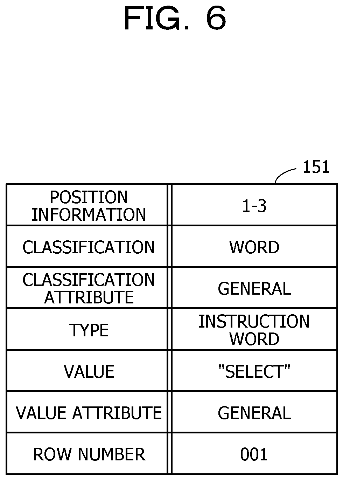

FIG. 6 is a diagram illustrating an example of attribute information.

Attribute information 151 is associated with one node of a syntax tree. The attribute information 151 includes position information, classification, a classification attribute, a type, a value, a value attribute, and a row number. Note that item values of a part of the items may not be defined depending on a type of the node.

The position information indicates a location of the node in the syntax tree. As will be described later, the position of the node may be expressed by two-dimensional coordinates including a vertical position and a horizontal position. The classification indicates highest classification such as a statement, a clause, a phrase, an expression, or a word. The classification attribute indicates a distinction between a general node and a complementary node. The general node indicates a language element directly extracted from description of a source code. The complementary node indicates a language element that is not explicitly described in the source code but is complemented for interpretation. The type is a group obtained by further subdividing the classification, such as a general phrase and an instruction word. The value is a character string of a word. The value attribute is a type of the value. The value attribute includes a general character string and a complementary character string. The row number is a number of a row in which a language element corresponding to the node appears in the source code.

The syntax tree may be expressed as a syntax table in a two-dimensional table format. With this configuration, it is easy to specify the position of the node, and it is easy to identify the node and describe a procedure of node search. The nodes included in the syntax tree are arranged in the syntax table according to the following rules.

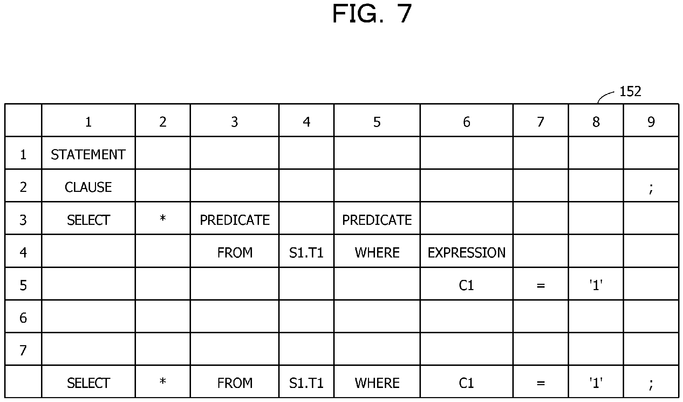

FIG. 7 is a diagram illustrating an example of the syntax table.

A syntax table 152 is a syntax table equivalent to the syntax tree 142 of FIG. 5. Position coordinates of an upper left cell of the syntax table 152 are (1, 1). A row number indicating a vertical position increases as going downward, and a column number indicating a horizontal position increases as going rightward. A position of each cell is specified by two-dimensional coordinates (row number, column number).

A node indicating a statement is arranged in the upper left cell of the syntax table 152. A child node on a leftmost side among child nodes immediately below a certain node is arranged in a cell one cell below a cell corresponding to the node. The cell one cell below is a cell having one more row number and the same column number. Another node having the same parent node as a certain node and on a right side of the node is arranged in a cell on the right side of a cell corresponding to the node. The cell on the right side is a cell having the same row number and a larger column number. A cell in which each node is arranged is determined in depth priority order.

In one column, nodes of one word included in the syntax tree are arranged. Thus, while row numbers of two nodes in a parent-child relationship are continuous, column numbers of two nodes having the same parent node may be discontinuous. With this configuration, word nodes corresponding to nine words included in the source code 141 are arranged from a first column to a ninth column of the syntax table 152 while holding the order. The syntax table 152 and the syntax tree 142 are mutually convertible. The syntax incompatibility information includes one or more specification instructions for searching for a node that satisfies a condition in the syntax tree and one or more rewrite instructions for rewriting a part of the nodes included in the syntax tree.

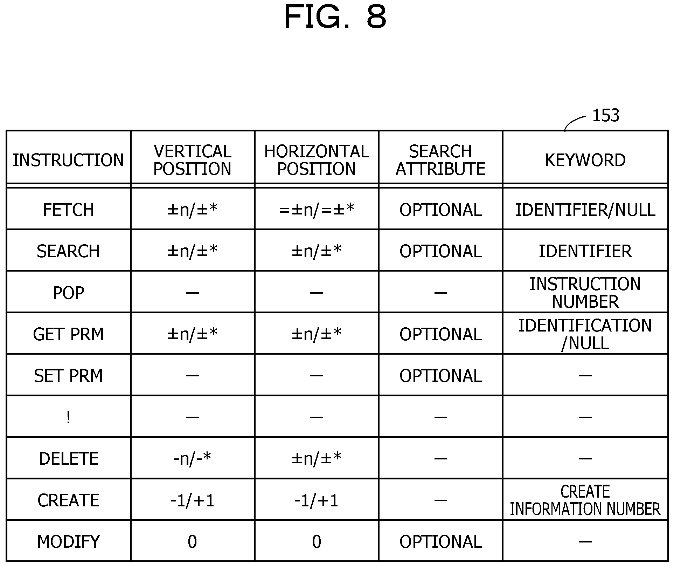

FIG. 8 is a diagram illustrating an example of an instruction table.

An instruction table 153 indicates definitions of instructions that may be used in syntax incompatibility information. One record of the instruction table 153 indicates one instruction. One record of the instruction table 153 includes an instruction, a vertical position, a horizontal position, a search attribute, and a keyword.

The vertical position, the horizontal position, the search attribute, and the keyword are arguments of the instruction. The vertical position is a condition for a vertical positional relationship between a current node and an object node, which are of interest. + indicates an upward direction, - indicates a downward direction, n indicates a distance from the current node, and * indicates no distance limit. The horizontal position is a condition for a horizontal positional relationship between the current node and the object node, which are of interest. = indicates the same horizontal position as that of the current node, + indicates a rightward direction, - indicates a leftward direction, n indicates a distance from the current node, and * indicates no distance limit.

The horizontal position may be specified in a format [instruction number]. This indicates that search is performed starting from a horizontal position of a node selected by an instruction having the instruction number. Furthermore, the horizontal position may be specified in a format [instruction number 1 : instruction number 2]. This indicates that search is performed between a horizontal position of a node selected by an instruction having the instruction number 1 and a horizontal position of a node selected by an instruction having the instruction number 2. The search attribute is a condition for classification, a classification attribute, a type, and a value attribute of the object node.

The keyword is information other than the search attribute for specifying a node. The keyword may be an identifier as a value of a word. Furthermore, an instruction number of an executed instruction may be specified as the keyword. This indicates that a node specified by the instruction is reselected. Furthermore, an action to be executed in a case where a result of the instruction is true, in other words, in a case where there is a node satisfying the condition, may be defined in association with the instruction.

No action indicates to proceed to the next instruction. RET indicates to execute the next instruction and return to the instruction in a case where a result of the next instruction is false. In a case where no node satisfying the condition is detected in the next instruction, the result of the next instruction is determined to be false. Furthermore, another instruction itself using attribute information of the current node of interest may be defined as the action.

The instruction includes FETCH, SEARCH, POP, GET PRM, SET PRM, !, DELETE, CREATE, and MODIFY. FETCH, SEARCH, POP, GET PRM, SET PRM, and ! may be used as the specification instructions. DELETE, CREATE, and MODIFY may be used as the rewrite instructions.

FETCH is an instruction for searching for a node satisfying the condition and changing the current node of interest (current node) to the detected node. SEARCH is an instruction for searching for a node satisfying the condition but does not change the current node. POP is an instruction for returning the current node to the node selected by the executed FETCH. GET PRM is an instruction for storing attribute information of the node satisfying the condition in a stack. SET PRM is an instruction for outputting the attribute information stored in the stack. SET PRM may be used in keywords of FETCH or SEARCH. ! is a negative instruction for inverting true/false. By adding ! before SEARCH, it is determined that a result of the instruction is true in a case where no node satisfying the condition is detected.

DELETE is an instruction for deleting a node in a specified range from the syntax tree with reference to the current node. CREATE is an instruction for inserting a partial tree before or after the current node. The partial tree to be inserted is stored as CREATE information separately from a sequence of instructions. CREATE has a CREATE information number identifying the CREATE information as an argument. MODIFY is an instruction for rewriting the attribute information of the current node. The action may specify a regular expression program.

Normally, for the syntax incompatibility information, the most characteristic keyword related to an incompatible portion is searched for first. A first keyword may be referred to as an anchor, and searching for the anchor from a syntax tree may be referred to as anchor search. For the syntax incompatibility information, a peripheral node having an attribute satisfying the condition is searched for from a periphery of the anchor in the syntax tree. With this configuration, a node set forming the incompatible portion is specified. A feature of the incompatible portion may be referred to as a unique condition. When the incompatible portion is detected, for the syntax incompatibility information, a node to be rewritten with any detected node as a base point is searched for. The base point may be the anchor.

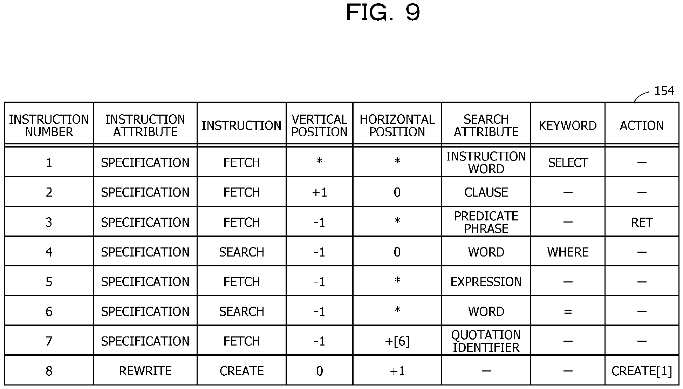

FIG. 9 is a diagram illustrating an example of the syntax incompatibility information.

Syntax incompatibility information 154 is stored in the incompatibility information storage unit 121. The syntax incompatibility information 154 is an example of the syntax incompatibility information applied to the syntax tree 142 illustrated in FIG. 5. Here, a case will be considered where C1='1' included in the source code 141 is incompatible with a database product after change, and syntax incompatibility is eliminated by performing rewriting to C1='1'::NUMERIC. One record of the syntax incompatibility information 154 corresponds to one specification instruction or one rewrite instruction. Each record of the syntax incompatibility information 154 includes an instruction number, an instruction attribute, an instruction, a vertical position, a horizontal position, a search attribute, a keyword, and an action.

The instruction number is a natural number in ascending order indicating execution order of an instruction. The instruction attribute indicates a distinction between the specification instruction and the rewrite instruction. The vertical position, the horizontal position, the search attribute, and the keyword are arguments of the instruction. The action indicates processing to be executed in a case where a result of the instruction is true. The syntax incompatibility information 154 includes eight instructions from a first instruction to an eighth instruction. The first instruction to the seventh instruction are the specification instructions, and the eighth instruction is the rewrite instruction.

The first instruction searches for the node 142a whose type is an instruction word and whose value is SELECT, and selects the node 142a as the current node. The second instruction searches for a node whose vertical position is one node above the current node and whose classification is a clause, and selects the node as the current node. The third instruction searches for a node whose vertical position is one node below the current node and whose type is a predicate phrase, and selects the node as the current node. In a case where there is a plurality of nodes corresponding to the third instruction, one node is selected and the following fourth instruction is executed. In a case where a result of the fourth instruction is false, the processing returns to the third instruction and another node is selected. The fourth instruction searches for the node 142b whose vertical position is one node below the current node, whose classification is a word, and whose value is WHERE.

The fifth instruction searches for a node whose vertical position is one node below the current node and whose type is an expression, and selects the node as the current node. The sixth instruction searches for the node 142c whose vertical position is one node below the current node, whose classification is a word, and whose value is an equal sign. The seventh instruction searches for the node 142d whose vertical position is one node below the current node, whose horizontal position is to the right of the node 142c detected in the sixth instruction, and whose type is a quotation identifier, and selects the node 142d as the current node. The eighth instruction adds, to the right of the current node, ::NUMERIC specified by the CREATE information number.

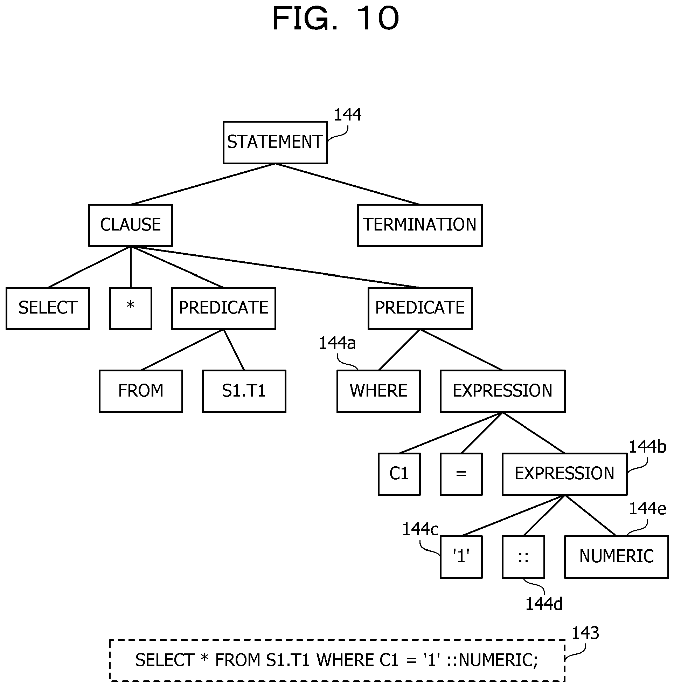

FIG. 10 is a diagram illustrating an example of the source code and the syntax tree after the conversion.

The incompatibility detection unit 124 generates a syntax tree 144 by executing an instruction of the syntax incompatibility information 154 on the syntax tree 142. The syntax tree 144 includes nodes 144a, 144b, 144c, 144d, and 144e.

The node 144a corresponds to the node 142b of the syntax tree 142, and has a keyword of WHERE. The node 144b represents an expression. The nodes 144c, 144d, and 144e are child nodes of the node 144b. The node 144c corresponds to the node 142d of the syntax tree 142, and has a keyword of '1'. The node 144d has a keyword of ::. The node 144e has a keyword of NUMERIC. The nodes 144b, 144d, and 144e are added by the eighth instruction of the syntax incompatibility information 154.

The incompatibility detection unit 124 generates a source code 143 from the syntax tree 144. With this configuration, the source code 141 is converted into the source code 143. The source code 143 includes an SQL statement of SELECT * FROM S1.T1 WHERE C1='1'::NUMERIC;.

Next, the performance incompatibility information will be described.

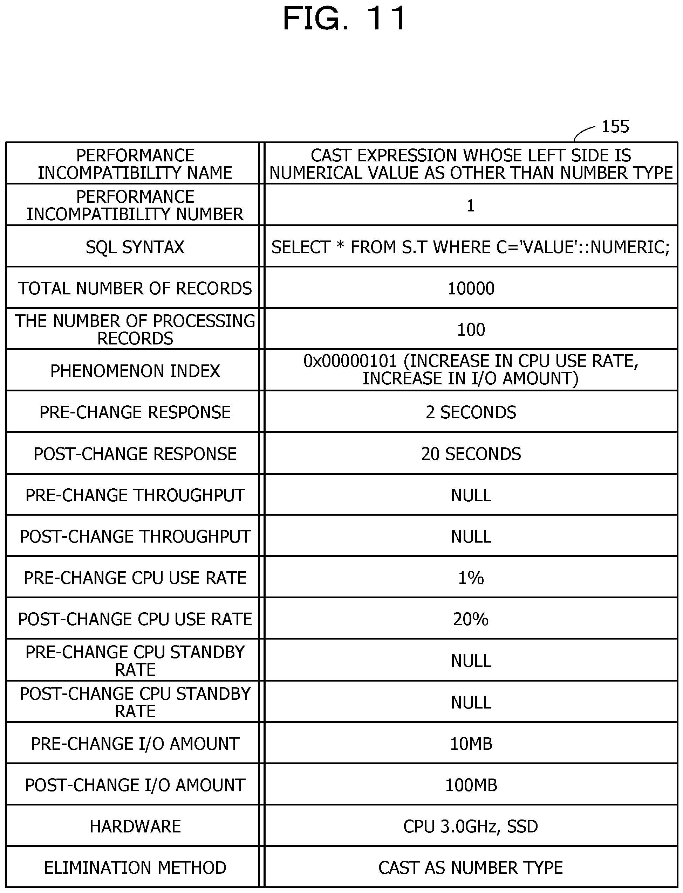

FIG. 11 is a diagram illustrating an example of the performance incompatibility information.

Performance incompatibility information 155 is stored in the incompatibility information storage unit 121. Here, a case will be considered where a load for executing a certain SQL statement is low in the database product before the change, but is high in the database product after the change. This performance incompatibility occurs in an SQL statement with syntax of SELECT * FROM S.T WHERE C='value'::NUMERIC;. Then, this performance incompatibility may be eliminated by changing ::NUMERIC to ::NUMBER.

The performance incompatibility information 155 includes a performance incompatibility name, a performance incompatibility number, SQL syntax, a total number of records, the number of processing records, a phenomenon index, a pre-change response, a post-change response, a pre-change throughput, and a post-change throughput. Furthermore, the performance incompatibility information 155 includes a pre-change CPU use rate, a post-change CPU use rate, a pre-change CPU standby rate, a post-change CPU standby rate, a pre-change I/O amount, a post-change I/O amount, hardware, and an elimination method.

The performance incompatibility name is a name that clearly represents a cause of occurrence of the performance incompatibility. The performance incompatibility number is an identification number for identifying the performance incompatibility information 155. The SQL syntax is syntax of an SQL statement in which the performance incompatibility occurs. The total number of records is the number of records stored in the database product when the performance incompatibility is found. The number of processing records is the number of records for which an SQL statement is to be processed when the performance incompatibility is found.

The phenomenon index is a set of flags indicating types of performance deterioration that has occurred in the database product. For example, the least significant bit represents an increase in a CPU use rate, the second bit from the bottom represents an increase in a CPU standby time, and the third bit from the bottom represents an increase in an I/O amount. One type of performance incompatibility may cause two or more types of performance deterioration phenomenon. The pre-change response is a response time to an SQL statement by the database product before the change, measured when the performance incompatibility is found. The post-change response is a response time to an SQL statement by the database product after the change, measured when the performance incompatibility is found.

The pre-change throughput is the number of processing records per unit time of the database product before the change, measured when the performance incompatibility is found. The post-change throughput is the number of processing records per unit time of the database product after the change, measured when the performance incompatibility is found. The pre-change CPU use rate is a CPU use rate of the database product before the change, measured when the performance incompatibility is found. The post-change CPU use rate is a CPU use rate of the database product after the change, measured when the performance incompatibility is found.

The pre-change CPU standby rate is a rate of a CPU standby time of the database product before the change, measured when the performance incompatibility is found. The rate of the CPU standby time is a rate of a standby time during which the CPU stands by for a response from a storage device to a time taken for processing of an SQL statement. The post-change CPU standby rate is a rate of a CPU standby time of the database product after the change, measured when the performance incompatibility is found. The pre-change I/O amount is a data transmission amount between the database product before the change and the storage device, measured when the performance incompatibility is found. The post-change I/O amount is a data transmission amount between the database product after the change and the storage device, measured when the performance incompatibility is found.

The hardware is specifications of hardware used when the performance incompatibility is found. The specifications of the hardware include, for example, the number of cores of the CPU, a clock frequency, a type of the storage device that stores a record, and the like. The elimination method is description of a countermeasure for eliminating the performance incompatibility. The elimination method may be a rewriting method of an SQL statement.

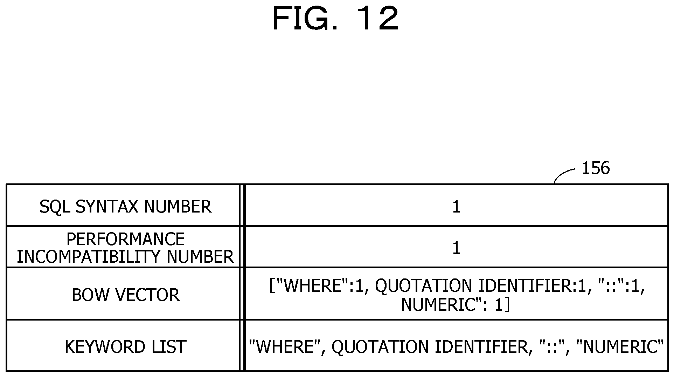

FIG. 12 is a diagram illustrating an example of SQL syntax information.

SQL syntax information 156 is stored in the incompatibility information storage unit 121. The SQL syntax information 156 represents a feature of an SQL statement in which performance incompatibility occurs. The SQL syntax information 156 is associated with the performance incompatibility information 155. The SQL syntax information 156 includes an SQL syntax number, a performance incompatibility number, a bag of words (BOW) vector, and a keyword list.

The SQL syntax number is an identification number for identifying the SQL syntax information 156. The performance incompatibility number is an identification number of the performance incompatibility information 155 indicating performance incompatibility caused due to SQL syntax indicated by the SQL syntax information 156. The BOW vector is a vector in which keywords included in the SQL statement in which the performance incompatibility occurs and the number of times of appearance thereof are listed. The keyword list is a list in which the keywords included in the SQL statement in which the performance incompatibility occurs are arranged in the appearance order in the SQL statement. Note that a keyword that does not affect occurrence of the performance incompatibility is excluded from the BOW vector and the keyword list.

For example, it is assumed that SQL syntax of WHERE... '...'::NUMERIC is a cause of occurrence of the performance incompatibility. In this case, a BOW vector indicating that there is one WHERE, one quotation identifier, one and one NUMERIC is generated. Furthermore, a keyword list indicating appearance order such as WHERE, a quotation identifier, ::, and NUMERIC is generated.

When the source code 141 is to be subjected to the incompatibility absorption, the incompatibility detection unit 124 performs syntactic analysis on the source code 141 to generate the syntax tree 142. The incompatibility detection unit 124 provisionally executes the specification instructions and the rewrite instructions of the syntax incompatibility information 154 on the syntax tree 142 to convert the syntax tree 142 into the syntax tree 144. Moreover, the incompatibility detection unit 124 collates the syntax tree 144 with the keyword list of the SQL syntax information 156 to determine whether the syntax tree 144 includes the SQL syntax of the SQL syntax information 156.

For example, the incompatibility detection unit 124 scans word nodes, which are leaf nodes of the syntax tree 144, from left to right. While scanning the word nodes of the syntax tree 144, the incompatibility detection unit 124 determines whether the keywords included in the keyword list appear in that order. In a case where all the keywords included in the keyword list appear in that order, the incompatibility detection unit 124 determines that the syntax tree 144 includes the SQL syntax of the SQL syntax information 156. In that case, the incompatibility detection unit 124 determines that there is a risk of the performance incompatibility indicated by the performance incompatibility information 155 when the source code 141 is rewritten according to the syntax incompatibility information 154.

On the other hand, in a case where not all the keywords included in the keyword list appear in that order, the incompatibility detection unit 124 determines that the syntax tree 144 does not include the SQL syntax of the SQL syntax information 156. In that case, the incompatibility detection unit 124 determines that the performance incompatibility indicated by the performance incompatibility information 155 does not occur even when the source code 141 is rewritten according to the syntax incompatibility information 154. Here, the nodes 144a, 144c, 144d, and 144e included in the syntax tree 144 correspond to the keyword list included in the SQL syntax information 156. Thus, the incompatibility detection unit 124 determines that there is the risk of the performance incompatibility.

Similarly to the incompatibility detection unit 124, the incompatibility information registration unit 123 also determines relevance between the syntax incompatibility information 154 and the performance incompatibility information 155. Note that, in inspection of the syntax incompatibility information 154, there may be no source code to which the syntax incompatibility information 154 may be applied. Therefore, the incompatibility information registration unit 123 analyzes the specification instructions included in the syntax incompatibility information 154 and estimates a structure of the syntax tree before conversion.

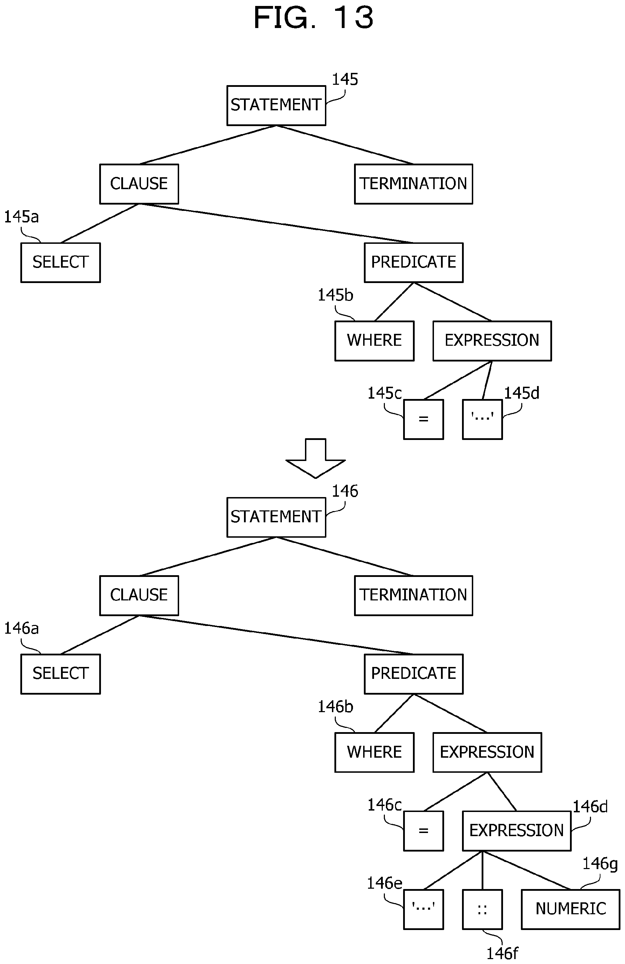

FIG. 13 is a diagram illustrating an estimation example of the syntax tree from the syntax incompatibility information.

When registering the syntax incompatibility information 154 in the incompatibility information storage unit 121, the incompatibility information registration unit 123 generates a syntax tree 145 from the specification instructions of the syntax incompatibility information 154. The syntax tree 145 corresponds to a partial tree of the syntax tree 142. The syntax tree 145 includes nodes 145a, 145b, 145c, and 145d.

The node 145a has a keyword of SELECT. The node 145a is generated from the first instruction of the syntax incompatibility information 154. The node 145b has a keyword of WHERE.

The node 145b is generated from the fourth instruction of the syntax incompatibility information 154. A relative position of the node 145b as seen from the node 145a is estimated based on the vertical positions and the horizontal positions of the second instruction to the fourth instruction of the syntax incompatibility information 154.

The node 145c represents an equal sign. The node 145c is generated from the sixth instruction of the syntax incompatibility information 154. A relative position of the node 145c as seen from the node 145b is estimated based on the vertical positions and the horizontal positions of the fifth instruction to the sixth instruction of the syntax incompatibility information 154. The node 145d represents a quotation identifier. The node 145d is generated from the seventh instruction of the syntax incompatibility information 154. A relative position of the node 145d as seen from the node 145c is estimated based on the vertical position and the horizontal position of the seventh instruction of the syntax incompatibility information 154.

The incompatibility information registration unit 123 generates a syntax tree 146 by executing the rewrite instructions of the syntax incompatibility information 154 on the syntax tree 145. The syntax tree 146 corresponds to a partial tree of the syntax tree 144. The syntax tree 146 includes nodes 146a, 146b, 146c, 146d, 146e, 146f, and 146g.

The node 146a corresponds to the node 145a, and has a keyword of SELECT. The node 146b corresponds to the node 145b, and has a keyword of WHERE. The node 146c corresponds to the node 145c, and represents an equal sign. The node 146d is a node added in the eighth instruction of the syntax incompatibility information 154, and represents an expression. The node 146e corresponds to the node 145c, and represents a quotation identifier. The node 146f is a node added in the eighth instruction of the syntax incompatibility information 154, and has a keyword of ::. The node 146g is a node added in the eighth instruction of the syntax incompatibility information 154, and has a keyword of NUMERIC.

The incompatibility information registration unit 123 collates the syntax tree 146 with the keyword list of the SQL syntax information 156 to determine whether the syntax tree 146 includes the SQL syntax of the SQL syntax information 156. Here, the nodes 146b, 146e, 146f, and 146g included in the syntax tree 146 correspond to the keyword list included in the SQL syntax information 156. Thus, the incompatibility information registration unit 123 determines that there is the risk of the performance incompatibility.

Next, a processing procedure of the information processing device 100 will be described.

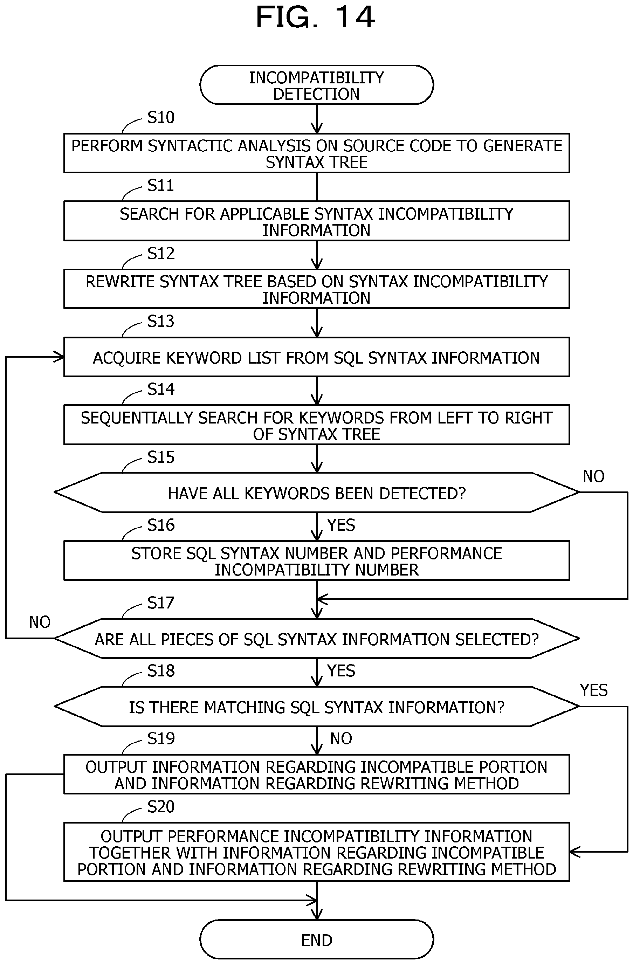

FIG. 14 is a flowchart illustrating an example of a procedure of incompatibility detection.

(S10) The incompatibility detection unit 124 acquires a source code to be subjected to incompatibility absorption. The incompatibility detection unit 124 performs syntactic analysis on the source code to generate a syntax tree.

(S11) The incompatibility detection unit 124 receives specification of a set of a database product before change and a database product after the change. The incompatibility detection unit 124 searches the incompatibility information storage unit 121 for syntax incompatibility information corresponding to the specified set.

(S12) The incompatibility detection unit 124 provisionally executes instructions of the syntax incompatibility information on the syntax tree generated in Step S10 to rewrite the syntax tree.

(S13) The incompatibility detection unit 124 selects one piece of SQL syntax information stored in the incompatibility information storage unit 121, and acquires a keyword list from the selected SQL syntax information.

(S14) The incompatibility detection unit 124 scans word nodes of the syntax tree rewritten in Step S12 from left to right, and sequentially searches for keywords included in the keyword list in Step S13. For example, the incompatibility detection unit 124 searches for a head keyword of the keyword list from left to right of the syntax tree. In a case where the head keyword is detected, the incompatibility detection unit 124 searches for the next keyword in the keyword list toward the right from the position. The incompatibility detection unit 124 continues this until a right end of the syntax tree is reached or an end keyword of the keyword list is detected.

(S15) The incompatibility detection unit 124 determines whether all the keywords included in the keyword list have been detected before the right end of the syntax tree is reached. In a case where all the keywords have been detected, the processing proceeds to Step S16. In a case where the right end of the syntax tree has been reached before all the keywords have been detected, the processing proceeds to Step S17.

(S16) The incompatibility detection unit 124 stores an SQL syntax number and a performance incompatibility number of the SQL syntax information selected in Step S13.

(S17) The incompatibility detection unit 124 determines whether all pieces of the SQL syntax information are selected in Step S13. In a case where all pieces of the SQL syntax information have been selected, the processing proceeds to Step S18, and in a case where there is an unselected piece of the SQL syntax information, the processing returns to Step S13.

(S18) The incompatibility detection unit 124 determines whether there is SQL syntax information matching the rewritten syntax tree, in other words, whether one or more SQL syntax numbers and performance incompatibility numbers are stored. In a case where there is matching SQL syntax information, the processing proceeds to Step S20, and in a case where there is no matching SQL syntax information, the processing proceeds to Step S19.

(S19) The incompatibility detection unit 124 outputs information indicating an incompatible portion detected by specification instructions of the syntax incompatibility information in Step S12 and information regarding a rewriting method indicated by rewrite instructions of the syntax incompatibility information. Then, the incompatibility detection ends.

(S20) The incompatibility detection unit 124 reads performance incompatibility information from the incompatibility information storage unit 121 based on the performance incompatibility number stored in Step S16. The incompatibility detection unit 124 outputs the performance incompatibility information together with the information regarding the incompatible portion and the information regarding the rewriting method.

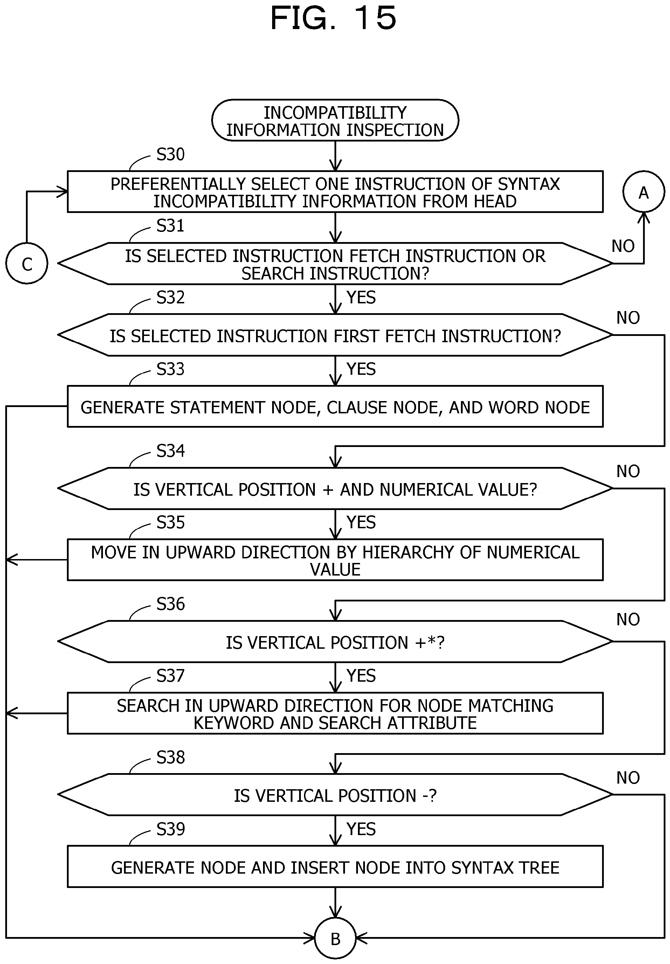

FIG. 15 is a flowchart illustrating an example of a procedure of incompatibility information inspection.

(S30) The incompatibility information registration unit 123 acquires new syntax incompatibility information. The incompatibility information registration unit 123 preferentially selects one instruction of the syntax incompatibility information from a head.

(S31) The incompatibility information registration unit 123 determines whether the selected instruction is a FETCH instruction or a SEARCH instruction. In a case where the selected instruction is the FETCH instruction or the SEARCH instruction, the processing proceeds to Step S32, and otherwise, the processing proceeds to Step S40.

(S32) The incompatibility information registration unit 123 determines whether the selected instruction is a first FETCH instruction included in syntax incompatibility information. The first FETCH instruction is a specification instruction representing an anchor search. In a case where the selected instruction is the first FETCH instruction, the processing proceeds to Step S33, and otherwise, the processing proceeds to Step S34.

(S33) The incompatibility information registration unit 123 generates a statement node, generates a clause node under the statement node, and generates a word node under the clause node. A value of this word node is a keyword specified in the FETCH instruction. Then, the processing proceeds to Step S44.

(S34) The incompatibility information registration unit 123 determines whether a vertical position of the selected instruction is + and a numerical value. In a case where the vertical position of the selected instruction satisfies the condition described above, the processing proceeds to Step S35, and in a case where the condition described above is not satisfied, the processing proceeds to Step S36.

(S35) The incompatibility information registration unit 123 moves a current node of interest in an upward direction by a hierarchy of the numerical value. Then, the processing proceeds to Step S44.

(S36) The incompatibility information registration unit 123 determines whether the vertical position of the selected instruction is +*. In a case where the vertical position of the selected instruction satisfies the condition described above, the processing proceeds to Step S37, and in a case where the condition described above is not satisfied, the processing proceeds to Step S38.

(S37) The incompatibility information registration unit 123 searches in the upward direction for a node matching a keyword and a search attribute of the selected instruction. Then, the processing proceeds to Step S44.

(S38) The incompatibility information registration unit 123 determines whether the vertical position of the selected instruction is -. In a case where the vertical position of the selected instruction satisfies the condition described above, the processing proceeds to Step S39, and in a case where the condition described above is not satisfied, the processing proceeds to Step S44.

(S39) The incompatibility information registration unit 123 generates a new node based on the selected instruction, and adds the new node under the current node of interest. Classification of the node generated here is a word, a classification attribute thereof is general, a type thereof is a type specified in the instruction, a value thereof is a keyword specified in the instruction, and a value attribute thereof is general. Then, the processing proceeds to Step S44.

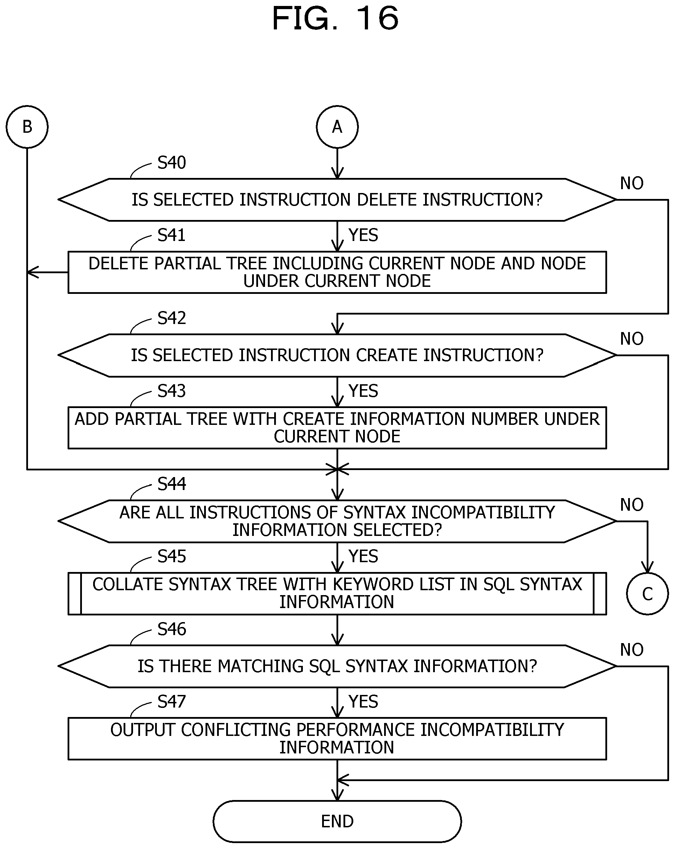

FIG. 16 is a flowchart (continued) illustrating the example of the procedure of the incompatibility information inspection.

(S40) The incompatibility information registration unit 123 determines whether the instruction selected in Step S30 is a DELETE instruction. In a case where the selected instruction is the DELETE instruction, the processing proceeds to Step S41, and otherwise, the processing proceeds to Step S42.

(S41) The incompatibility information registration unit 123 deletes a partial tree including the current node of interest and a node coupled under the current node. Then, the processing proceeds to Step S44.

(S42) The incompatibility information registration unit 123 determines whether the instruction selected in Step S30 is a CREATE instruction. In a case where the selected instruction is the CREATE instruction, the processing proceeds to Step S43, and otherwise, the processing proceeds to Step S44.

(S43) The incompatibility information registration unit 123 adds a partial tree indicated by a CREATE information number specified by the CREATE instruction under the current node of interest.

(S44) The incompatibility information registration unit 123 determines whether all the instructions included in the syntax incompatibility information are selected in Step S30. In a case where all the instructions are selected, the processing proceeds to Step S45, and in a case where there is an unselected instruction, the processing returns to Step S30.

(S45) The incompatibility information registration unit 123 collates a generated syntax tree with a keyword list included in SQL syntax information by a method similar to that in Steps S13 to S17 described above.

(S46) The incompatibility information registration unit 123 determines whether there is SQL syntax information matching the syntax tree. In a case where there is matching SQL syntax information, the processing proceeds to Step S47, and in a case where there is no matching SQL syntax information, the incompatibility information inspection ends.

(S47) The incompatibility information registration unit 123 reads conflicting performance incompatibility information from the incompatibility information storage unit 121 based on a performance incompatibility number stored in Step S45. The incompatibility information registration unit 123 outputs the read performance incompatibility information.

As described above, the information processing device 100 of the second embodiment accumulates, as the knowledge information, the incompatibility information defining the procedure of the incompatibility absorption for the source code of the program using the database product. By using the accumulated incompatibility information, the information processing device 100 automatically detects the incompatible portion included in the source code and presents the elimination method the incompatibility to a user. Furthermore, the information processing device 100 automatically rewrites the source code so as to eliminate the incompatibility. Thus, the incompatibility absorption is made more efficient.

Furthermore, when registering the new syntax incompatibility information in the knowledge database, the information processing device 100 determines the relevance between the syntax incompatibility information and the performance incompatibility information indicating the known performance incompatibility. The information processing device 100 evaluates a risk of occurrence of the performance incompatibility by the rewriting method defined in the syntax incompatibility information, and in a case where there is the risk of the performance incompatibility, warns a creator of the syntax incompatibility information to that effect. Thus, the occurrence of the performance incompatibility is suppressed, and the quality and reliability of the syntax incompatibility information registered in the knowledge database are improved. Furthermore, reworking of the incompatibility absorption work using the syntax incompatibility information is suppressed, and the incompatibility absorption is made more efficient.

Furthermore, the information processing device 100 determines the relevance between the syntax incompatibility information and the performance incompatibility information also when performing the incompatibility absorption using the syntax incompatibility information. Thus, the risk of the performance incompatibility found after registration of the syntax incompatibility information is also evaluated, and the occurrence of the performance incompatibility is suppressed. Furthermore, by presenting the performance incompatibility information to a user, the user may select an efficient rewriting method of the source code in consideration of a degree of performance deterioration.

The above description merely indicates a principle of the present invention. Moreover, numerous modifications and variations may be made by those skilled in the art, and the present invention is not limited to the above-described or illustrated exact configuration and application example, and all corresponding modifications and equivalents are regarded to fall within the scope of the present invention by appended claims and equivalents thereof.

### REFERENCE SIGNS LIST

10 Information processing device
11 Storage unit
12 Processing unit
13, 14 Incompatibility information
15 Syntax tree
16 Warning information

## Claims

1. An information processing program that causes a computer to execute a process, the process comprising:
acquiring first incompatibility information that indicates a feature of a first language element included in a first source code that uses first software and a rewriting method of the first language element for making the first source code compatible with second software;
rewriting a syntax tree that indicates a structure of a plurality of language elements that includes the first language element based on the rewriting method indicated by the first incompatibility information;
searching the rewritten syntax tree for the second language element based on second incompatibility information that indicates a feature of a second language element included in a second source code that uses the second software and an event that occurs due to the second source code; and
outputting warning information that indicates relevance between the rewriting method and the event in a case where the second language element is included in the rewritten syntax tree.

2. The information processing program according to claim 1, wherein
the event is performance deterioration of the second software.

3. The information processing program according to claim 1, wherein
the second incompatibility information further indicates another rewriting method for suppressing the event, and
the warning information further indicates the another rewriting method in addition to the rewriting method.

4. The information processing program according to claim 1, wherein
the second incompatibility information includes, as the feature of the second language element, a keyword list that indicates order of a plurality of keywords included in the second source code, and
the warning information is output in a case where the plurality of keywords is included in the syntax tree in the order indicated by the keyword list.

5. The information processing program according to claim 1, further causing the computer to execute processing comprising
generating, when the first incompatibility information is inspected, the syntax tree based on the feature of the first language element indicated by the first incompatibility information.

6. The information processing program according to claim 1, further causing the computer to execute processing comprising
generating, when a third source code that uses the first software is corrected, the syntax tree by syntactic analysis of the third source code.

7. An information processing method for a computer to execute a process comprising:
acquiring first incompatibility information that indicates a feature of a first language element included in a first source code that uses first software and a rewriting method of the first language element for making the first source code compatible with second software;
rewriting a syntax tree that indicates a structure of a plurality of language elements that includes the first language element based on the rewriting method indicated by the first incompatibility information;
searching the rewritten syntax tree for the second language element based on second incompatibility information that indicates a feature of a second language element included in a second source code that uses the second software and an event that occurs due to the second source code; and
outputting warning information that indicates relevance between the rewriting method and the event in a case where the second language element is included in the rewritten syntax tree.

8. An information processing device comprising:
a storage unit that stores first incompatibility information that indicates a feature of a first language element included in a first source code that uses first software and a rewriting method of the first language element for making the first source code compatible with second software, and second incompatibility information that indicates a feature of a second language element included in a second source code that uses the second software and an event that occurs due to the second source code; and
a processing unit that rewrites a syntax tree that indicates a structure of a plurality of language elements that includes the first language element based on the rewriting method indicated by the first incompatibility information, searches the rewritten syntax tree for the second language element based on the second incompatibility information, and outputs warning information that indicates relevance between the rewriting method and the event in a case where the second language element is included in the rewritten syntax tree.
